# EUROPEAN PATENT SPECIFICATION

(11) **EP 1 629 228 B1**
(45) Date of publication and mention of the grant of the patent: **16.08.2017**
(21) Application number: 04751432.8
(22) Date of filing: 06.05.2004
(51) Int. Cl.: G01R 27/08, G01N 27/20, G01N 17/02

(54) **METHOD FOR NON-DESTRUCTIVELY TESTING CONDUCTIVE MEMBERS EMPLOYING ELECTROMAGNETIC BACK SCATTERING**
VERFAHREN ZUR ZERSTÖRUNGSFREIEN PRÜFUNG VON LEITFÄHIGEN ELEMENTEN UNTER VERWENDUNG ELEKTROMAGNETISCHER RÜCKSTREUUNG
PROCEDE DE TEST NON DESTRUCTIF D'ELEMENTS CONDUCTEURS AU MOYEN DE LA RETRODIFFUSION ELECTROMAGNETIQUE

(30) Priority: 06.05.2003 US 468626 P
(43) Date of publication of application: 01.03.2006
(73) Proprietor: WaveTrue, Inc., New York, NY 10013 (US)
(72) Inventor: BURNETT, Gale, Ferndale, WA 98248 (US); FROST, Charles A., Albuquerque, NM 87122 (US)
(74) Representative: Boult Wade Tennant
(86) International application number: PCT/US2004/014038
(87) International publication number: WO 2004/102056

(56) References cited:
- WO-A-97/32219
- WO-A-98/55877
- DE-A1- 3 016 223
- US-A- 2 887 652
- US-A- 4 291 204
- US-A- 5 905 194
- US-A1- 2003 016 028

## Description

### TECHNICAL FIELD

The present invention relates to testing methods for metallic pipes and, more specifically, to methods for detecting anomalies such as corrosion at remote locations on insulated, shielded metallic pipes.

### BACKGROUND OF THE INVENTION

Corrosion of steel pipes can degrade the structural integrity of the pipeline system. In some pipeline systems, the metallic pipe is insulated with a urethane foam covering and protected by an outer metallic shield. For insulated, shielded pipes, visual inspection is impossible without physically removing the insulation and outer shield.

Current methods of testing insulated, shielded pipe without removing the insulation and outer shield include acoustic wave propagation through the metal and x-ray radiography. However, acoustic wave propagation and x-ray radiography are only applicable to a single point location or over a short distance.

The need thus exists for improved systems and methods for testing for anomalies on a length of insulated, shielded pipe without removing the shielding and insulation.

US 5905194, US 2003/0016028, WO 98/55877 and WO 97/32219 describe methods and apparatus for detecting faults in pipelines by applying an electrical pulse to the pipeline and monitoring transmitted and/or reflected pulses. In some of these prior art documents, the pipe is conductive surrounded by an insulating layer and outer shielding.

### SUMMARY OF THE INVENTION

The present invention provides a method of analyzing a pipe system for the presence of an anomaly, such as corrosion, the method as set out in claim 1. The pipe system comprises a pipe, insulation around the pipe, and shielding around the insulation. An electrical pulse is applied to a test location on the pipe remote from the anomaly to cause an applied signal to travel along the pipe through the anomaly. At least one reflected signal caused by the applied signal traveling through the anomaly is detected. The at least one reflected signal is analyzed for characteristics associated with the anomaly.

### BRIEF DESCRIPTION OF THE DRAWINGS

FIGS. 1 and 1B are somewhat schematic views of systems for testing for anomalies on a pipe system;
FIGS. 2-14 are graphs plotting data obtained using the systems described in FIGS. 1, 1B, and 15.
FIGS. 15 and 16 are somewhat schematic views of systems for testing for anomalies on a pipe system;
FIGS. 17-19 are partial cutaway views depicting an example probe system that may be used by the testing system of FIG. 16; and
FIG. 20 is a graph plotting data obtained using the system depicted in FIG. 16.

### DETAILED DESCRIPTION OF THE INVENTION

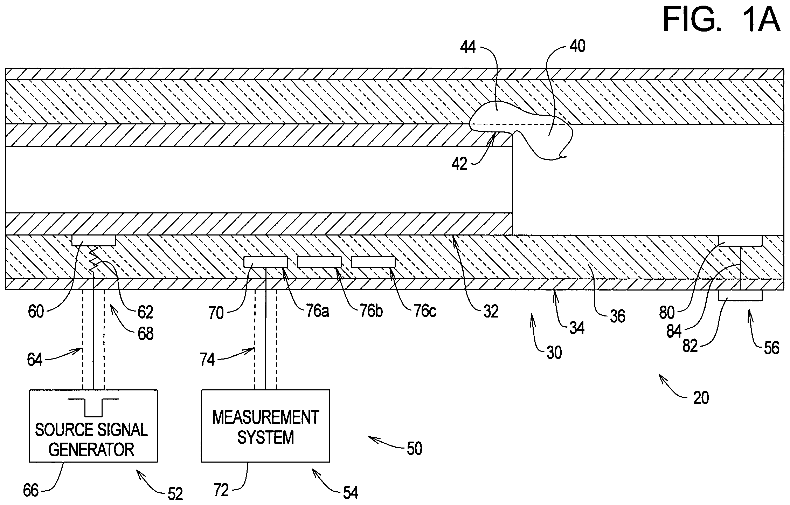

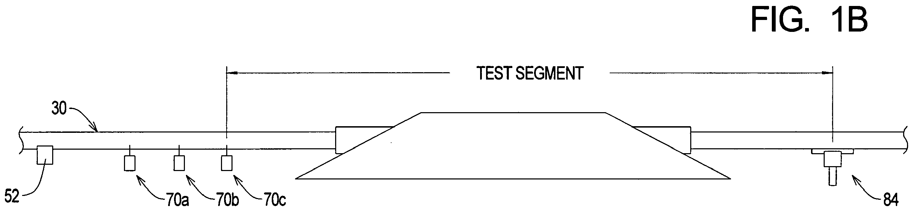

Referring initially to FIG. 1 of the drawing, depicted therein is a typical measurement setup 20 constructed in accordance with, and embodying, the principles of the present invention. The example measurement system 20 is designed test for anomalies in a pipeline system 30 comprising a conductive pipe 32, a conductive outer shield 34, and insulation 36. The pipe 32 and outer shield 34 are typically metallic, and the insulation 36 is typically urethane foam. The pipe 32 is typically centered in the shield 34 by the insulating layer 36. The pipeline system 30 thus effectively forms a constant impedance coaxial transmission line capable of propagating electromagnetic waves in the transverse electromagnetic (TEM) mode.

Illustrated at 40 in FIG. 1 is an anomaly such as an area of corrosion on the outside of the pipe 32. The anomaly 40 can affect the wave transmission by the pipeline system 30. In particular, the impedance of a coaxial transmission line is a function of the diameter of the inner and outer conductor and the dielectric constant of the material between them.

In the context of the pipeline system 30, the anomaly 40 can change the physical properties of the pipe 32, which in turn can affect the impedance of the system 30. For example, if the anomaly 40 is corrosion, the corrosion may thin the wall of the pipe 32 as shown at 42 in FIG. 1, thereby changing the impedance of the system 30. Corrosion can also spread into the insulating layer 36 as shown at 44 in FIG. 1, which can also affect the impedance of the pipeline system 30 by modifying the dielectric constant between pipe 32 and the shield 36. These changes in impedance can cause electromagnetic pulses propagating along the coaxial transmission line formed by the pipeline system 30 to reflect back toward the source of the electromagnetic wave or pulse.

FIG. 1 further illustrates a test system 50 for detecting anomalies such as the anomaly 40 along the pipeline system 30. The example test system 50 comprises a source system 52, a sensor system 54, and a marker system 56. The source system 52 applies an electromagnetic pulse signal to the pipeline system 30. The sensor system 54 detects electromagnetic waves propagating along the pipeline system 30. The marker system 56 allows the test system 50 to be calibrated for a particular pipeline system 30 under test.

The example test system 50 tests the quality and integrity of metallic pipelines using the backward reflection of an electromagnetic impulse wave propagating along the pipe. In particular, the test system 50 propagates an electromagnetic impulse along the pipe and observes reflections from corrosion and other features which might affect the integrity of the system. The test system 50 thus allows improved electromagnetic inspection without removal of the entire shield and/or insulation. The test system 50 further allows testing of complete segments of pipe over extended lengths. Given the foregoing general understanding of the present invention, the example test system 20 will now be described in further detail.

The example source system 52 comprises a launcher 60, a matching resistor 62, a coaxial cable 64, and a pulse generator 66. The launcher 60 is used to excite waves which propagate in both directions along the pipe 32. In particular, the example launcher 60 makes electrical ohmic contact with the pipe 32 to cause waves to propagate in the insulation 36 between the pipe 32 and the outer shield 34.

The matching resistor 62 is used to prevent reflected energy from traveling back toward the source system 52 through the coaxial data cable 64. The value of the matching resistor 62 is chosen to terminate the coaxial cable 64 in its characteristic impedance.

The pulse generator 66 forms the source of electromagnetic energy which excites the electromagnetic waves in the pipe system 30. The pulse generator 66 generates electromagnetic energy in any one of a number forms. As examples, the pulse generator 66 could provide a 500 Volt negative impulse with a duration of 2 nanoseconds or a step waveform with similar characteristics.

The coaxial cable 64 transmits the voltage pulses generated by the pulse generator 66 to an injection point 68 on the pipe 32 and shield 34. The application of the voltage pulses to the injection point 68 causes a current pulse to be launched in both directions from the injection point 68. The electromagnetic impulse propagates away from the injection point 68 in both directions in the space between the pipe 32 and the shield 34.

The sensor system 54 detects reflections from the anomaly 40 or other anomalies on the pipe system 30. The sensor system 54 comprises an electric field sensor 70, a measurement device 72, and a coaxial line 74. The electric field sensor 70 is a differentiating electric field sensor that detects electromagnetic waves by capacitive coupling of the electric field. One example of the electric field sensor 70 is known in the art as a D-dot probe. When subjected to a local electric field at the measurement point, a D-dot probe responds with an output voltage which is proportional to the time rate of change of the local electric field at the measurement point. The example D-dot probe used as the electric field sensor 70 consists of a small capacitive element which couples to the local electric field.

The output signal from the electric field sensor 70 is coupled to the measurement device 72 using the coaxial line 74. The measurement device 72 is preferably an oscilloscope or digital transient data recorder such as a Tektronix 3054 digital oscilloscope. The measurement device 72 records a signal which is proportional to the time derivative of the electric field at the location of the electric field sensor 70.

In use, the sensor system 54 will detect a first pulse as the exciting wave passes the electric field sensor 70. Later pulses are seen if signals reflect from variations in coaxial transmission line impedance, such as those caused by an anomaly 40 such as an area of corrosion on the pipe.

The signals recorded on the measurement device 72 can be numerically integrated to recover the local electric field waveform at the measurement point of the electric field sensor 70. Such a waveform will show an initial pulse coming from the source system 52, followed by reflections coming from anomalies on the line.

One object of the invention is to isolate reflections which come from the left or the right side of the injection point so that locations of anomalies can be identified unambiguously. Reflections will be seen from anomalies both to the right and to the left from the injection point. To separate these, the electric field sensor 70 may be moved to separate first, second, and/or third sensor locations 76a, 76b, and 76c which could, for example, be separated by a distance of 1.5m (5 feet). Alternatively, three separate probes and/or measurement systems may be used, one for each of the sensor locations. Timing of the wave arrival of the incident and reflected pulse at the three separate locations 76a, 76b, and 76c allows both the distance and the direction of the anomaly to be determined by simple wave propagation calculation.

In addition, the three recorded signals from three separate locations can be time shifted by a fixed delay to bring each reflection from the right hand direction into time coincidence. Reflections from the left will not coincide. When added together the three time-shifted waveforms give a unidirectional measurement looking to the right. A second integration of the recorded data can give additional information about the magnitude and longitudinal extent of the measured anomalies.

The wave impedance of a coaxial transmission line is well known to depend on the spacing of the inner conductor and outer conductor and the dielectric properties of the insulating media separating them. The Applicant has discovered that the wave impedance of the pipeline system 30 is similar to the wave impedance of a coaxial transmission line.

Referring initially to conductor spacing, a change in the conductor spacing causes a corresponding change in the impedance. In the context of the pipe system 30, if the effective diameter of the pipe 32 (the inner conductor) is increased, the conductor spacing decreases, yielding lower wave impedance and causing a reflection with polarity opposite to the source polarity. If the effective diameter of the pipe 32 decreases, the wave impedance is increased, causing a reflection with the same polarity as the source.

The insulating media between the inner and outer conductors also has an effect on wave impedance. In the context of the pipe system 30, if the dielectric constant of the insulating layer 36 is increased by the presence of moisture or higher density foam, the local wave impedance will be lowered, and a reflection with polarity opposite to the source will be generated.

The presence of corrosion products or other material with high dielectric constant in the space between the pipe and the outer shield will also cause a reflection with polarity opposite to the source impulse waveform. Conversely, a gap in the shield or a region of missing insulation will result in higher wave impedance, and this higher wave impedance will reflect a signal with the same polarity as the source. In addition, the duration of the reflected signal corresponds with the length over which the increased dielectric material occurs.

Using the test system 50, all of these factors can be used to determine the presence, extent, and location of anomalies along the pipe system 30.

The marker system 56 is used to calibrate or set a reference for the test system 50. The marker system comprises a pipe engaging member 80, a shield engaging member 82, and a shorting conductor 84.

The marker system 56 is placed at a known point on the pipe 32. The marker system 56 forms a direct short circuit connection between the pipe 32 and the shield 34. The exemplary pipe engaging member 80 and shield engaging member 82 magnetically attach to the pipe 32 and shield member 34, respectively. The shorting conductor 84 is typically a low inductance braid or strap conductor that connects the pipe engaging member 80 to the shield engaging member 82.

The marker system 56 provides a high quality connection between the pipe 32 and shield 34 which will reflect a known quantity of energy back toward the source system 52. The marker is used to calibrate the system 50 by determining a propagation speed of propagation in the particular insulation used as the insulating layer 36. Knowledge of wave propagation speed is used for range calibration. A wave speed of 3.51 nanoseconds per meter (1.07 nanoseconds per foot) is typically measured for the urethane foam insulation used on the Alaska pipeline.

The marker system 56 also allows verification of proper operation of the system 50 by providing a known reflection signal. The level of attenuation of the reflected pulse from the marker system 46 gives an overall indication of the quality of the insulation forming the insulating layer 36 and also can reveal defects in the outer shield 34.

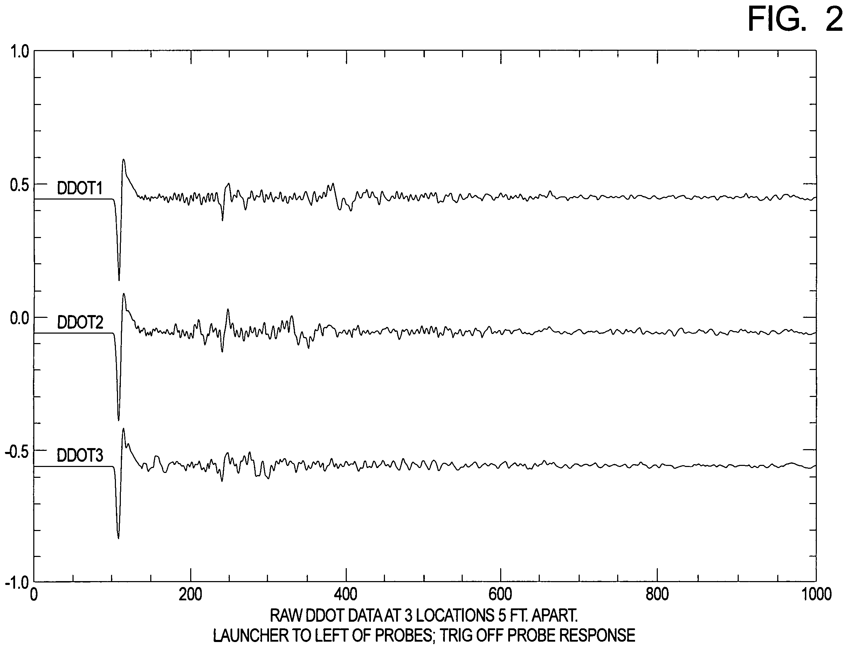

Referring now to FIGS. 2-14, depicted therein are graphs showing data collection and analysis using the principles of the present invention. The Ddot antenna, as it is used in this application, provides the derivative of the source field as it propagates and reflects in the space between the pipe and the shield. Therefore, the unaltered signal, propagating and reflecting along the pipe, will contain high frequency information which, often will hide or mask information concerning the physical condition of the pipe. FIG. 2 illustrates raw data collected using the Ddot antenna as described herein as the electric field sensor 70. Raw data as shown in FIG. 2 is beneficial in analyzing the pipeline system for very small flaws determined by a combination of pulse rise time, pulse width, and bandwidth of the detection hardware.

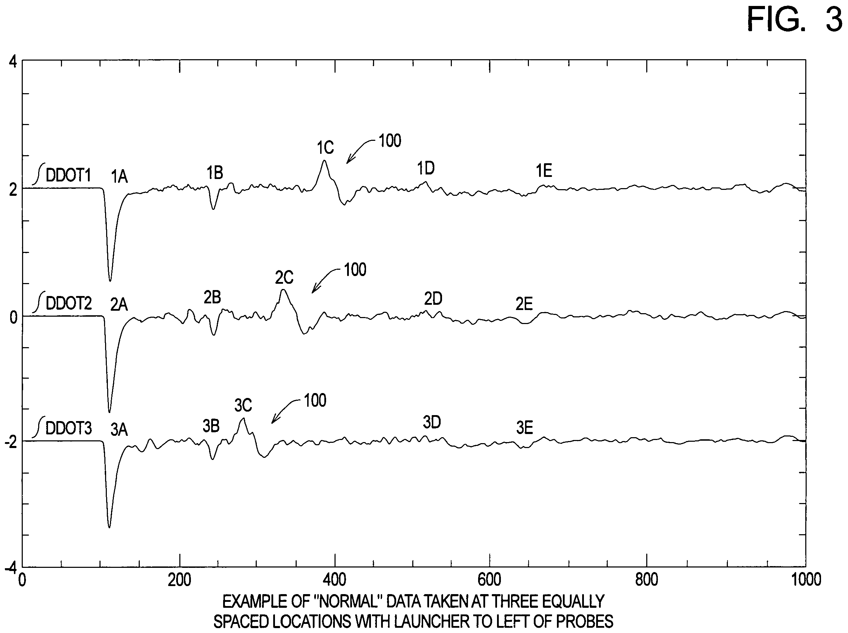

Integration of the raw data may more clearly illustrate the effect of the propagation path on the injected pulse. Since the Ddot antenna sensor differentiates the injected pulse, this integration approximately reproduces the injected pulse, smoothes out some of the very high frequency information in the raw data, and makes it easier to see larger anomalies that more closely correlate to pipeline anomalies that are of interest to the pipeline operating company. The chart depicted in FIG. 3 is an example of how the data appears after the first integration step.

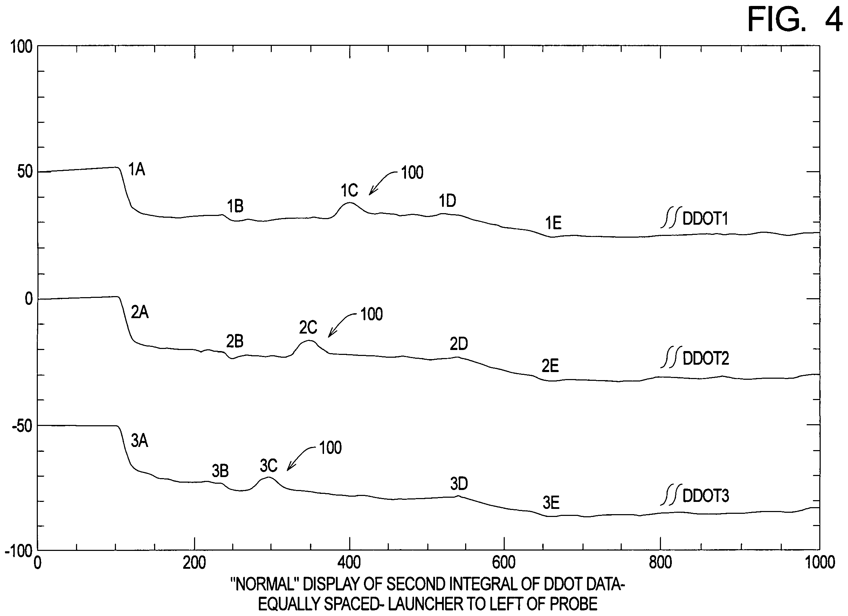

To observe still another family of anomalies, one more level of integration may be used. The second integral of the raw Ddot data illustrates how the pipeline would respond to a step function, while using an impulse type pulse generator or pulser. The second integral of the data provides some additional smoothing, is less sensitive to small anomalies, and provides better visibility of larger anomalies. FIG. 4 illustrates how the data appears after the taking of the second integral of the raw data.

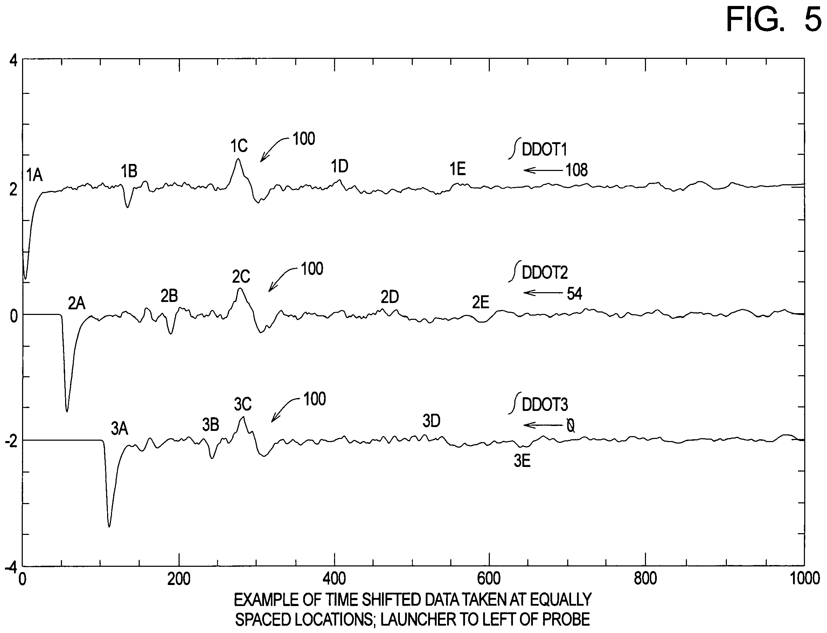

The data may also be time shifted to determine exactly what direction the anomalies come from and where they are located. FIG. 5 illustrates the time shifting of the data after the first integration step. FIG. 1B attached hereto is a somewhat schematic diagram illustrating a simplified layout of the particular pipeline configuration that was present where this data was acquired.

FIG. 5 illustrates five features identified using reference characters A, B, C, D, and E for each Ddot probe location. The first arrival of the pulse from the launcher is at position "A". Features "B", "D", and "E" in general are located to the left of the launcher, because they are not time shifted. Note however, that the feature at "C" is time shifted in the data as the Ddot probes are moved to the right. The anomalies to the right of the launcher, will appear earlier in time as the Ddot is moved to the right. For this particular test, the pipe segment going under the roadway and through a casing lies to the right of the probes and is the one of most interest.

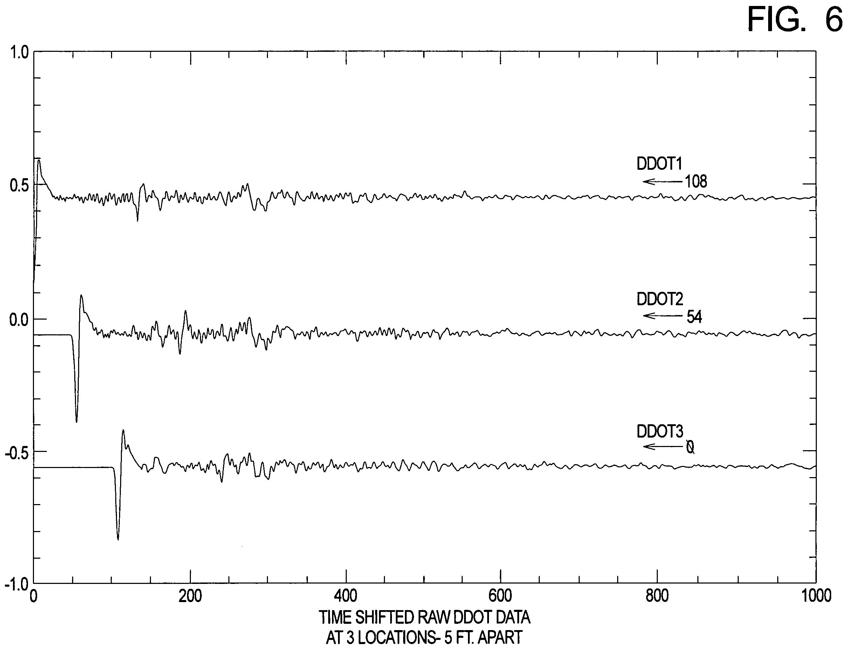

FIG. 5 thus allows us to see the right side data properly oriented by time shifting probe positions #1 and #2 with respect to #3 as shown above. In this view, it is clear that the feature at "C" is in horizontal alignment at all three Ddot probe positions, the first arrival pulses at "A" and the features at "B", "D", and "E" are now not aligned. The differences are not quite as obvious because of all the high frequency in the raw data, but they can still be seen in close inspection of that data shown in FIG. 6.

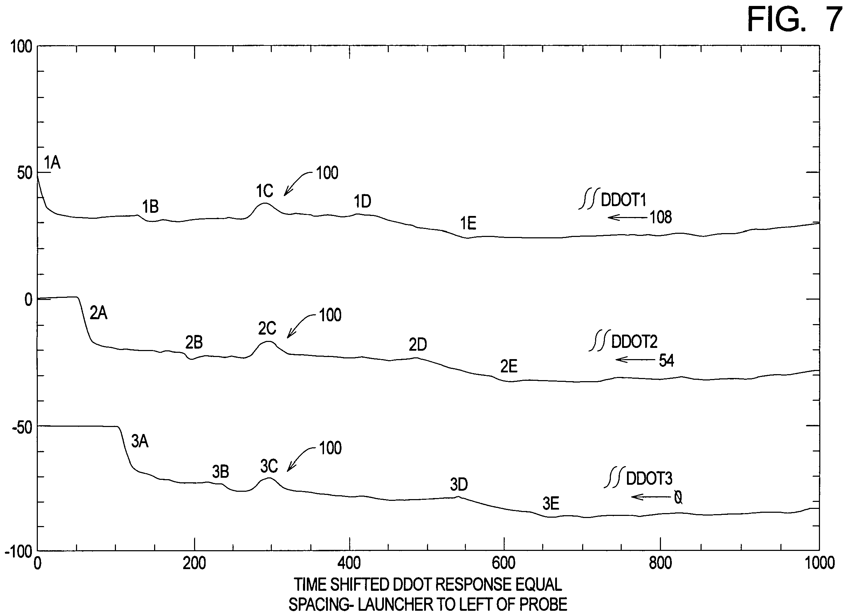

FIG. 7 illustrates the time shifted double integral. FIG. 7 shows the normal double integral data. Note again that only location "C" is time shifted to the left, indicating that it is physically located to the right of the Ddot probes. When the data is time shifted with respect to Ddot location #3, all locations "C" are horizontally aligned, while "A", "B", "D", and "E" are no longer aligned.

One additional step can be taken to enhance the data. The time shifted data at each probe location may be summed and divided by the number of sensor locations 76, which in this case is three.

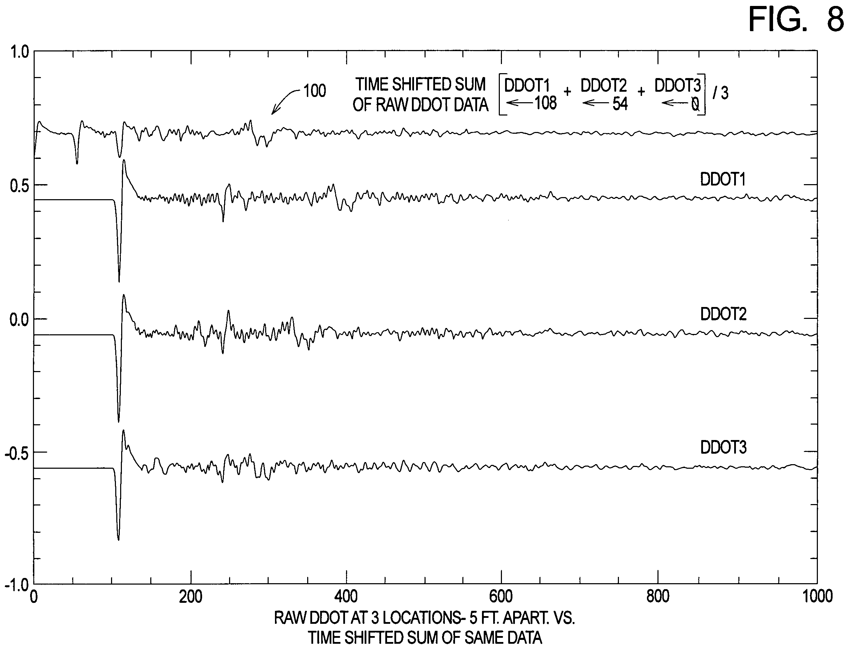

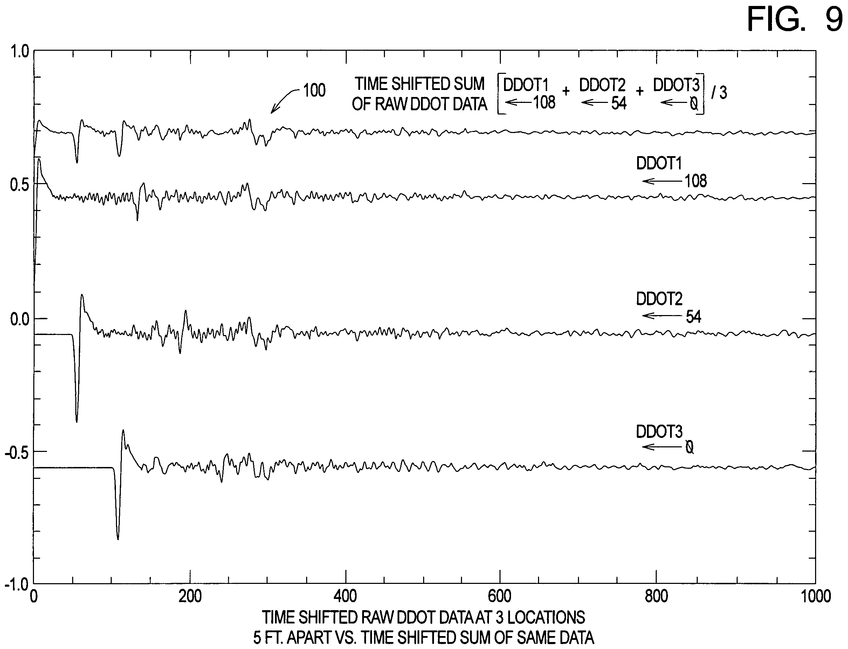

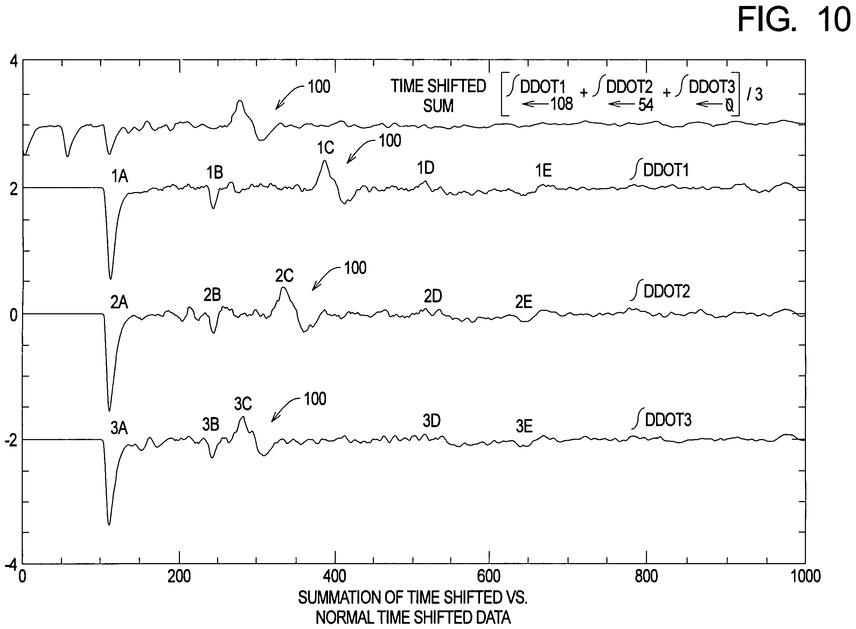

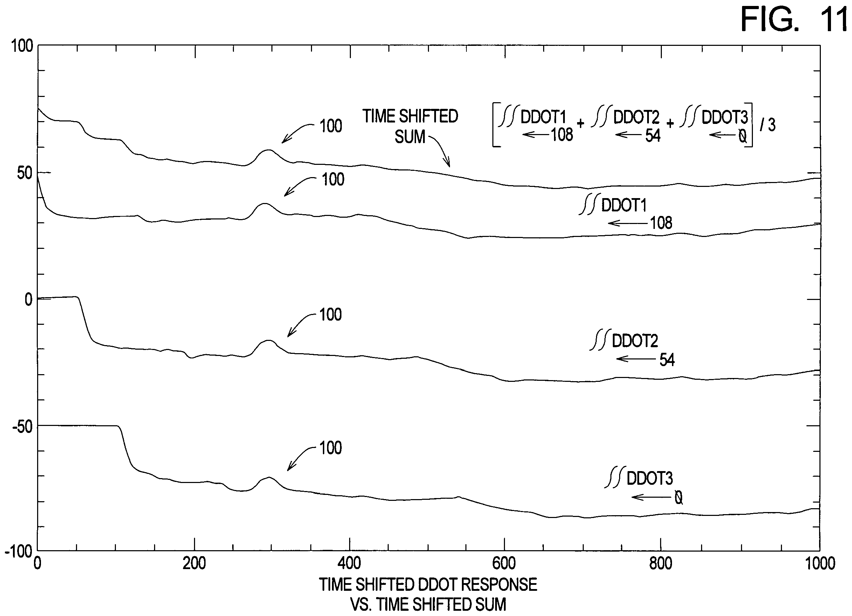

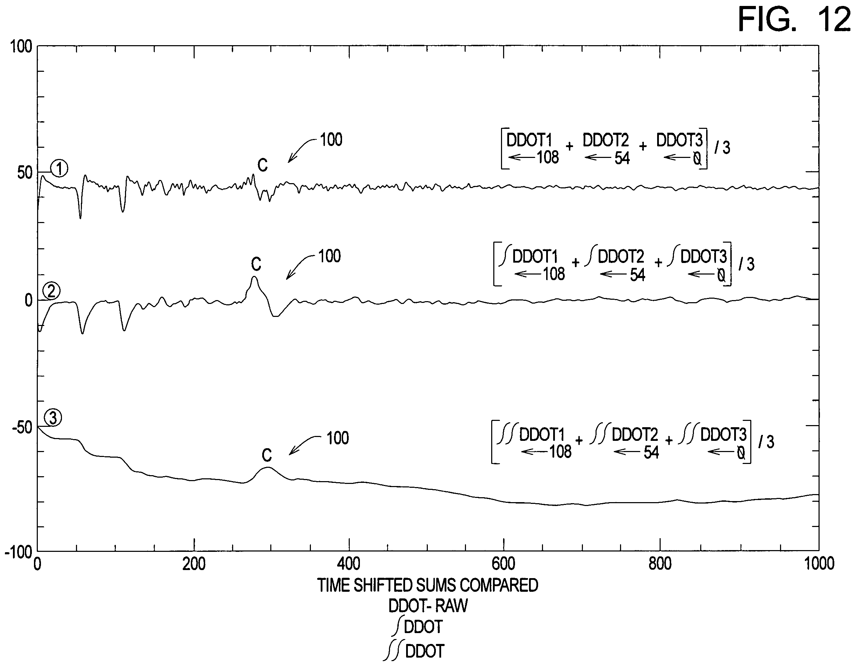

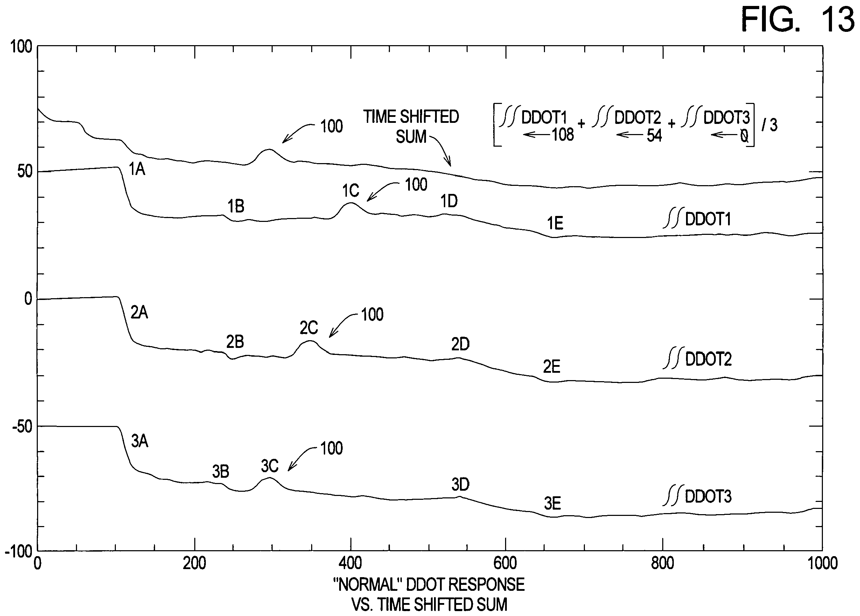

FIG. 8 shows the summation of the time shifted waveforms for the raw data. FIG. 9 shows the summation of the time shifted waveforms for the first integral of the raw data. FIG. 10 illustrates the summation of the time shifted waveforms for the first integral of the raw data. FIG. 11 illustrates the summation of the time shifted waveforms for the second integral of the raw data. FIG. 12 compares the time shifted summation of the raw data, the first integral of the raw data, and the second integral of the raw data. FIG. 13 compares the time shifted sum of the second integral of the raw data with the second integral of the raw data. Note, sequentially, how the information in the test segment to the right of the Ddot probes becomes clear.

The anomaly indicated at 100 in the data depicted in FIGS. 3-5, 7, 10-13 was excavated after the test, and corrosion with 60% metal loss was found at the exact location indicated by the data.

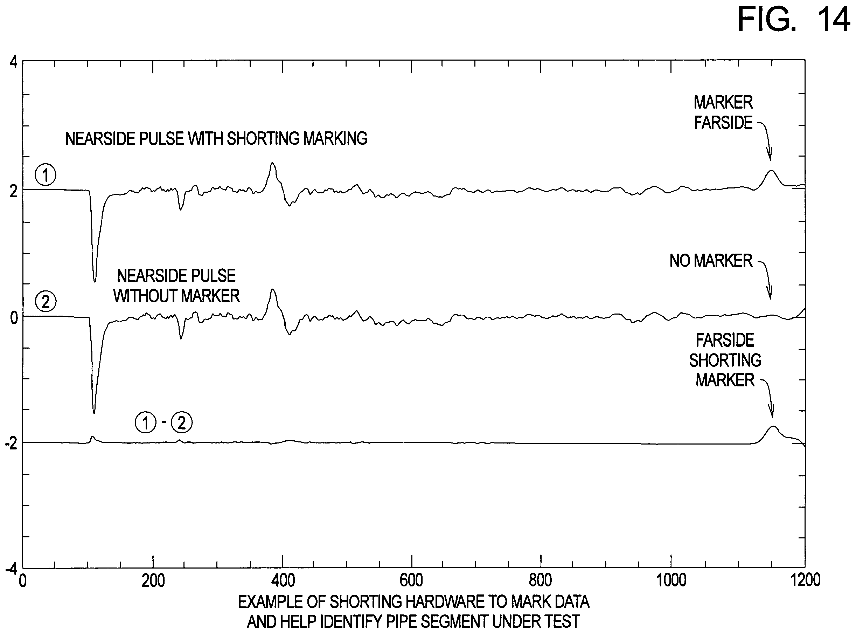

FIG. 14 illustrates the process of using the marker system 56 to help correlate characteristics of the graphs with the pipe under test. The sensor 70 used by the test system 50 may take the form of a self-integrating probe as will be described below. Very low level signals, due to improper grounding, or baseline shifts in the acquisition, can cause problems with the data that make it very difficult to interpret. A self-integrating probe can enhance data collection and overcome the problems described above.

In particular, a Ddot probe has been adapted to the tip of a Tektronix FET probe, such as the P6243. Instead of a resistive voltage divider, this system becomes a capacitive voltage divider, and the output of the probe is the first integral of the raw data. In some embodiments the short jumpers may be eliminated, and the probe may interface to a much higher output Ddot with gold plated pins approximately 1/4 inch from the pipe jacket. Such a system significantly reduces electrical noise sometimes associated with the resistive voltage divider design. This improvement thus helps overcome the difficulties of maintaining laboratory quality measurement in a harsh environment.

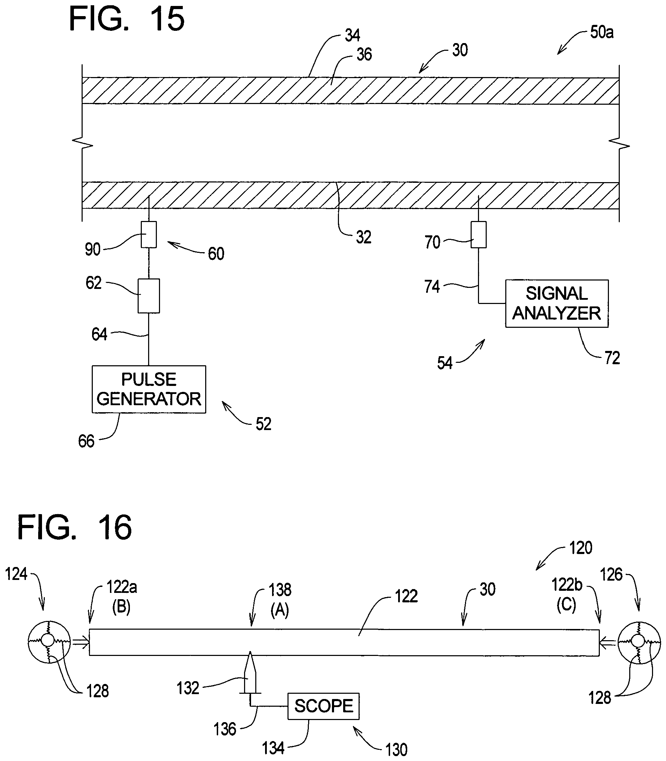

In addition, shown in FIG. 15 is a modified test system 50a in which the source system 52 uses a Ddot probe 90 as the launcher 60 to launch the pulse onto the pipe 32. The pulse will be applied to the pipe using the Ddot probe 90 as the launcher 60 to inject the signal into the space between the pipe 32 and the external shield 34.

Several advantages are obtained from the use of the Ddot probe 90 as the launcher 60. First, the Ddot probe 90 need not be in resistive contact with the pipe 32.

Another advantage of using a Ddot probe as a pulse launcher 60 is that the pulser 60 can be made an integral part of the launcher 60 with a built in rate generator. This enhances multi-port signal injection without the need for additional signal cables or large battery packs. In very close quarters, such as found in refineries and chemical processing plants, the process would be extremely portable and combined with some of the other improvements, the test results could be almost real time.

A Ddot probe detects the electric field and is omni directional. A Bdot probe detects the magnetic field and is directional. A possible improvement over the use of a self integrating Ddot probe would be to use a Bdot probe, which would automatically detect the direction of the anomaly on the pipe. The use of a Bdot probe may be considered a hardware implementation of what is described above in software and might result in more accuracy, less training of personnel, and higher test production.

Referring now to FIG. 16, depicted therein is yet another exemplary test system 120 constructed in accordance with, and embodying, the principles of the present invention. The test system 120 is shown testing a segment 122 of insulated, shielded pipe 30 as described above.

As schematically shown in FIG. 16, the example segment 122 of pipe 30 comprises first and second terminating assemblies 124 and 126 formed by four terminating resistors 128. The terminating assemblies 124 and 126 allow the segment 122 to simulate a longer pipe and do not form a part of the present invention. In the example segment 122 depicted in FIG. 16, the segment 122 is approximately 30.5 metres (100 feet) long.

The test system 120 comprises a signal processing system 130 comprising a probe 132 and a signal analyzer 134 connected by a cable 136. The probe 132 is arranged at a test location 138 spaced between the ends 122a and 122b of the segment 122. In particular, the test location 138 is approximately 6.7 metres (twenty-two feet) from the first segment end 122a and approximately 23.8 metres (seventy-eight feet) from the second segment end 122b. The test location 138 and first and second segment ends 122a and 122b will be referred to as points A, B, and C, respectively.

The example probe 132 functions as both a source of a pulse or series of pulses applied to the pipe system 30 and as a sensor for receiving any reflected pulses arising from features or anomalies of the pipe system 30. The sensor portion of the probe 132 transmits any such reflected pulses to the signal analyzer 134 through the cable 136. The probe 132 further generates a trigger pulse that is sent to the signal analyzer 134 through the cable 136 to facilitate analysis of the reflected pulses.

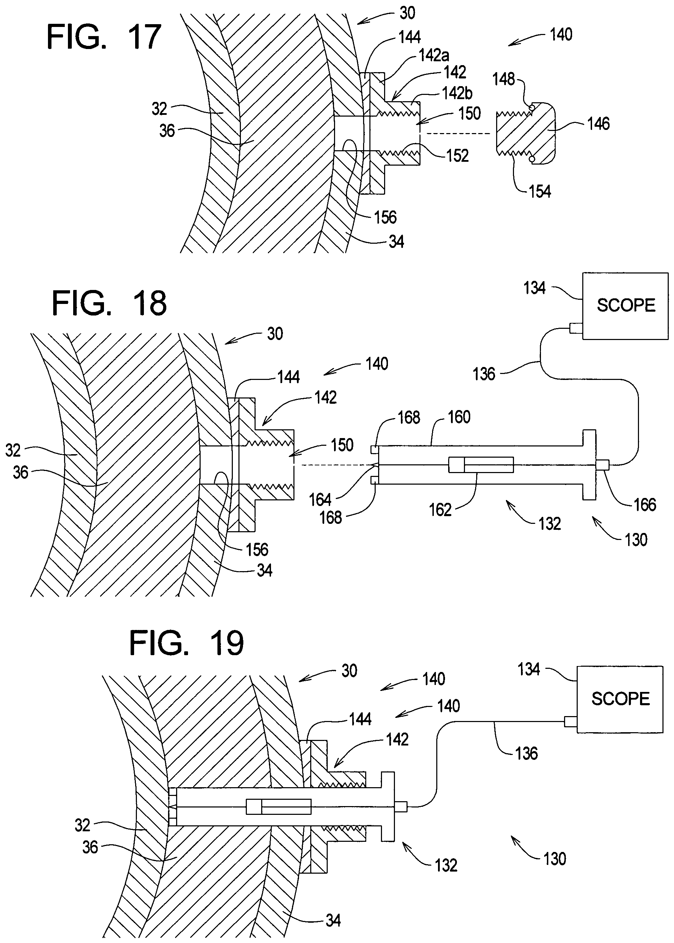

Referring now to FIGS. 17-19, depicted in detail therein is an example embodiment of the probe 132 and an attachment system 140 for detachably attaching the probe 132 to the pipe 30.

As shown in FIG. 17, the example attachment system 140 comprises a base member 142, a seal 144, a cap member 146, and an O-ring 148. The base member 142 defines a flange portion 142a and a mounting portion 142b. The mounting portion 142b defines a passageway 150. The passageway 150 defines a first threaded surface 152, while the cap member 146 defines a second threaded surface 154. The cap member 146 may be detachably attached to the base member 142 using the threaded surfaces 152 and 154, but other attachment systems can be
used.

The flange portion 142a of the base member 142 is attached to the shielding 34 by screws, bolts, adhesives, or the like. A shield opening 156 is formed in the shielding 34 to allow access to the pipe 32 through the passageway 150. The seal 144 may be formed, as examples, by a separate gasket or a layer of hardened adhesive between the base member 142 and shielding 34. The mounting portion 142b of the base member 142 defines the passageway 150 and extends outwardly away from the pipe system 30.

In a first configuration, the cap member 146 is detachably attached to the base member 142 such that the cap member 146 closes the passageway 150; the seal 144 and O-ring 148 inhibit entry of moisture into the pipe system 30 through the shield opening 156 in this first configuration. In a second configuration, the cap member 146 is detached from the base member 142 such that pipe 32 is accessible through the passageway 150 and the shield opening 156.

As perhaps best shown in FIG. 18, the probe 132 comprises a housing 160, electronics 162, a pipe terminal 164, a cable terminal 166, and alignment projections 168. The electronics 162 are mounted within the housing 160. The pipe terminal 164 is supported at one end of the housing 160. The cable terminal 166 is also supported by the housing 160. The pipe terminal 164 and cable terminal 166 are electrically connected to the electronics 162.

The housing 160 is sized and dimensioned to be inserted at least partly through the passageway 150 and the shield opening 156. Although other shapes may be used, the passageway 150, shield opening 156, and housing 160 are at least partly cylindrical in the example signal processing system 130.

To use the signal processing system 130, the probe housing 160 is inserted through the passageway 150 and shield opening 156 until the pipe terminal 164 comes into contact with the pipe 32. The alignment projections 168 also engage the pipe 32 to center the pipe terminal 164 on the curve of the pipe 32. Additionally, a fixing mechanism may be used to fix the position of the probe housing 160 relative to the base member 142 when the pipe terminal 168 is in a desired relationship with the pipe 32. For example, a set screw or the like may extend through the mounting portion 142b of the base member 142. Rotating the set screw relative to the base member 142 displaces the set screw towards the housing 160 to force the housing 160 against the threaded surface 152 to secure the housing 160 relative to the base member 142.

The electronics 162 are then activated to apply an electrical pulse to the pipe 32 through the pipe terminal 164. Applied signals will thus propagate in both directions away from the test location 138. The pulse generator may take the form of a simple timing circuit that generates an electrical pulse; the electrical pulse may take on a number of forms, but the example electronics 162 generates a step function waveform. The electronics 162 further comprise an impedance matching resistor arranged between the pulse generator and the pipe terminal 164.

As described above, the applied signals traveling away from the test location 138 may encounter anomalies and features of the pipe system 130 that will cause at least one reflected signal to travel back towards the test location 138. The probe 132 is further capable of detecting at least some of the reflected signals as they pass through the test location 138. In particular, the probe 132 may directly sense the reflected signals through ohmic contact between the pipe terminal 164 and the pipe 32. In this case, a simple resistive divider probe may be connected to the pipe terminal 164. Alternatively, a Ddot probe may be arranged within the housing 160 adjacent to the pipe terminal 164 to introduce reflected signals into and/or sense reflected signals in the pipe system 30.

In any case, the electronics 162 contains circuitry as necessary to introduce the applied signals into the pipe 32 and sense the reflected signals traveling through the test location 138. The reflected signals sensed by the electronics 162 are applied to the cable terminal 166 for transmission to the signal analyzer 134. The electronics 162 further may generate a trigger signal corresponding to the generation of the electrical pulses applied to the pipe 32. The trigger signal is also applied to the cable terminal 166 to facilitate analysis of the reflected signals by the signal analyzer 134.

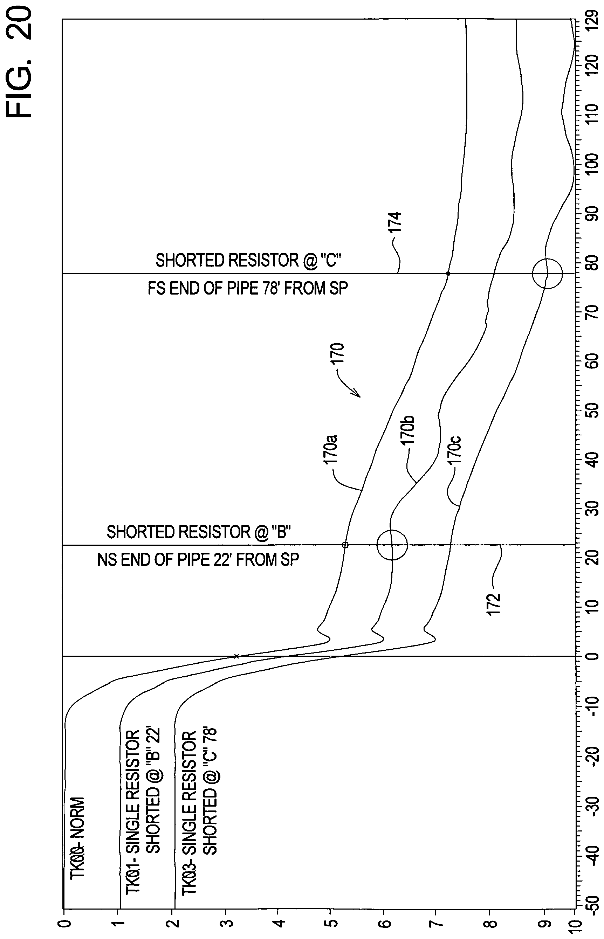

Referring now to FIG. 20, depicted therein is a graph 170 representing the reflected signals received using the signal processing system 130 on the pipe segment 120 illustrated in FIG. 16. The graph 170 contains three traces 170a, 170b, and 170c.

The trace 170a depicts the signal measured by the signal analyzer 134 with the standard test setup as depicted in FIG. 16 (i.e., four terminating resistors 128 connected to each end 122a and 122b). The standard test setup generally corresponds to a good pipe of infinite length. After an initial steep drop and rise in the time interval represented by approximately 0 to 3 on the X-axis, the trace 170a begins a gradual, relatively featureless decline.

The trace 170b illustrates the signal measured by the signal analyzer 134 with one of the terminating resistors 128 shorted on the first end 122a of the segment 122. The trace 170b is similar to the trace 170a in the time interval represented by approximately 1-15 of the X-axis. In the time interval represented by approximately 15-30 on the X-axis, the slope of the trace 170b increases and becomes positive. In the time interval represented by approximately 30-130, the trace 170b generally declines in a manner similar to the trace 170a but exhibits change in slope similar to those associated with an oscillation. A line 172 in FIG. 20 illustrates that the scale associated with the X-axis has been selected such that the initial rise in the slope of the trace 170b corresponds to the location 6.7 metres (22 feet) away.

The trace 170c illustrates the signal measured by the signal analyzer 134 with one of the terminating resistors 128 shorted on the second end 122b of the segment 122. The trace 170c is similar to the trace 170a in the time interval represented by approximately 1-75 of the X-axis. In the time interval represented by approximately 75-83 on the X-axis, the slope of the trace 170c increases and becomes positive. In the time interval represented by approximately 83-130, the trace 170c generally declines in a manner similar to the trace 170a but exhibits change in slope similar to those associated with an oscillation. A line 174 in FIG. 20 illustrates that the scale associated with the X-axis has been selected such that the initial rise in the slope of the trace 170c corresponds to the approximately location 23.8 metres (78 feet) away.

Analyzing both traces 170b and 170c in the context of the scale selected for the X-axis illustrates that the anomalies in the traces 170b and 170c generally correspond to the anomalies in the pipe segment 122 at the first and second ends 122a and 122b thereof, respectively. The test system 120 thus effectively determines differences in impedance introduced in the test segment 122. The Applicants believe that the test system 120 can thus be used to determine differences in impedance caused by anomalies in a pipe system such as corrosion.

In addition, signal processing techniques described above with reference to FIGS. 2-14 may also be applied to the traces 170b and 170c. For example, subtracting the trace 170b from the trace 170a will result in a series of spikes, with the first such spike being associated with the anomaly at the first end 122a of the pipe segment 122. Additional signal processing techniques might allow the traces to be examined by relatively low-skilled technicians or even automated such that the detection of anomalies may be performed by a computer.

The example pipe segment 122 depicted in FIG. 16 is a very simple case of a straight pipe with no features such as terminations, corners, changes in diameter, or the like. In the real world, the pipe system 30 may be used to form a long pipeline or an extensive network of interconnected pipes at a manufacturing site. In such a larger pipe system, features of the pipe in good condition may cause reflected signals that may not be easily distinguishable from reflected signals generated by anomalies, such as corrosion, associated with failed or failing pipe.

To facilitate the recognition of features associated with failed of failing pipe, traces may be generated for pipe in known good condition at one point in time and compared with traces generated at one or more later points in time. Changes in the traces over time can be monitored. If these changes fall outside predetermined parameters, the pipe under test can be checked for failure at locations associated with changes in the trace.

Also, to test discrete portions of the pipe system 30 in a larger system, the probe 132 may be detachably attached in sequence to one or more discrete test locations in the pipeline or network of pipes. FIGS. 17-19 describe one possible attachment system 140 that may be used for this purpose. Alternatively, probes like the probe 132 may be permanently attached to one or more test locations located along the pipeline or throughout the pipe network. In this case, the probe 132 may be provided with an access port, memory, and/or telemetry systems for simplifying the process of obtaining data.

## Claims

1. A method of analyzing a pipe system (30), comprising a pipe (32), insulation around the pipe (36), and shielding (34) around the insulation, for the presence of an anomaly (40) on the pipe, comprising the steps of:
applying an electrical pulse to a test location (68) to cause an applied electromagnetic wave signal to travel along the pipe through the anomaly;
arranging at least one of an electric field sensor and a magnetic field sensor (70) at a plurality of separate measurement locations (76a, 76b, 76c) between the test location (68) and a location (40, 42, 43) of the anomaly; measuring a reflected signal at each of the plurality of separate measurement locations, and determining whether the reflections come from left or the right side of the test location (68);
analyzing the reflected signals for signal anomalies associated with pipe impedance of the pipe at the location of the anomaly to determine the existence of the anomaly on the pipe; and
determining the location of the anomaly by timing the wave arrival of the incident and reflected pulses at each of the plurality of measurement locations (76a, 76b, 76c) and determining the distance and the location of the anomaly by a wave propagation calculation.

2. A method as recited in claim 1, further comprising the steps of:
detecting, at a first reflection measurement location (76a), a first representation of the at least one reflected signal caused by the applied signal traveling through the anomaly;
detecting, at a second reflection measurement location (76b), a second representation of the at least one reflected signal caused by the applied signal traveling through the anomaly; and
analyzing the first and second representations of the at least one reflected signal for signal anomalies associated with the anomaly on the pipe.

3. The method of claim 1, further comprising providing a probe, wherein the probe comprises a housing (160), electronics (162), a pipe terminal (164), a cable terminal (166) and alignment projections (168).

4. A method as recited in claim 1, in which the step of arranging at least one of an electric field sensor and a magnetic field sensor at the plurality of measurement locations comprises the step of detecting an output voltage signal proportional to a time rate of change of at least one of an electric field and a magnetic field.

5. A method as recited in claim 4, further comprising the step of integrating the output voltage signal with respect to time.

6. A method as recited in claim 4, further comprising the step of double integrating the output voltage signal with respect to time.

7. A method as recited in claim 1, in which the step of determining the location of the anomaly based on a direction of the reflected signals passing through the measurement locations comprises the step of comparing graphical representations of the reflected signals measured at each of the plurality of separate measurement locations.

8. A method as recited in claim 1, in which the step of determining the location of the anomaly based on a direction of the reflected signals passing through the measurement locations comprises the step of summing time shifted waveforms of at least two of the reflected signals measured at each of the plurality of separate measurement
locations.

## Patentansprüche

1. Verfahren zum Analysieren eines Leitungssystems (30), umfassend eine Leitung (32), eine Isolierung um die Leitung herum (36) und eine Abschirmung (34) um die Isolierung herum, hinsichtlich des Vorliegens einer Anomalie (40) an der Leitung, umfassend die Schritte:
Einwirken eines elektrischen Pulses auf eine Testposition (68), um ein eingewirktes elektromagnetisches Wellensignal zu veranlassen, entlang der Leitung durch die Anomalie zu laufen;
Anordnen von wenigstens einem aus einem elektrischen Feldsensor und einem magnetischen Feldsensor (70) an einer Mehrzahl von separaten Messpositionen (76a, 76b, 76c) zwischen der Testposition (68) und einer Position (40, 42, 43) der Anomalie; Messen eines reflektierten Signals an jeder aus der Mehrzahl von separaten Messpositionen und Bestimmen, ob die Reflektionen von der linken oder der rechten Seite der Testposition (68) kommen;
Analysieren der reflektierten Signale hinsichtlich Signalanomalien, welche mit einer Leitungsimpedanz der Leitung an der Position der Anomalie verknüpft sind, um das Vorliegen der Anomalie an der Leitung zu bestimmen; und
Bestimmen der Position der Anomalie durch Zeitnahme der Wellenankunft der einfallenden und reflektierten Pulse an jeder aus der Mehrzahl von Messpositionen (76a, 76b, 76c) und Bestimmen des Abstands und der Position der Anomalie durch eine Wellenausbreitungs-Berechnung.

2. Verfahren nach Anspruch 1, ferner umfassend die Schritte:
Detektieren einer ersten Repräsentation des wenigstens einen reflektierten Signals, welches von dem eingewirkten Signal hervorgerufen wird, welches durch die Anomalie läuft, an einer ersten Reflektions-Messposition (76a);
Detektieren einer zweiten Repräsentation des wenigstens einen reflektierten Signals, welches von dem eingewirkten Signal hervorgerufen wird, welches durch die Anomalie läuft, an einer zweiten Reflektions-Messposition (76b); und
Analysieren der ersten und zweiten Repräsentation des wenigstens einen reflektierten Signals hinsichtlich Signalanomalien, welche mit der Anomalie an der Leitung verknüpft sind.

3. Verfahren nach Anspruch 1, ferner umfassend ein Bereitstellen einer Sonde, wobei die Sonde ein Gehäuse (160), Elektronikelemente (162), einen Leitungsanschluss (164), einen Kabelanschluss (166) und Ausrichtungsvorsprünge (168) umfasst.

4. Verfahren nach Anspruch 1, in welchem der Schritt des Anordnens von wenigstens einem aus einem elektrischen Feldsensor und einem magnetischen Feldsensor an der Mehrzahl von Messpositionen den Schritt eines Detektierens eines Ausgabespannungs-Signals umfasst, welches proportional zu einer zeitlichen Änderungsrate von wenigstens einem aus einem elektrischen Feld und einem magnetischen Feld ist.

5. Verfahren nach Anspruch 4, ferner umfassend den Schritt eines Integrierens des Ausgabespannungs-Signals bezüglich der Zeit.

6. Verfahren nach Anspruch 4, ferner umfassend den Schritt eines doppelten Integrierens des Ausgabespannungs-Signals bezüglich der Zeit.

7. Verfahren nach Anspruch 1, in welchem der Schritt des Bestimmens der Position der Anomalie auf Grundlage einer Richtung der reflektierten Signale, welche durch die Messpositionen verlaufen, den Schritt eines Vergleichens von grafischen Repräsentationen der reflektierten Signale umfasst, welche an jeder aus der Mehrzahl von separaten Messpositionen gemessen werden.

8. Verfahren nach Anspruch 1, in welchem der Schritt des Bestimmens der Position der Anomalie auf Grundlage einer Richtung der reflektierten Signale, welche durch die Messpositionen verlaufen, den Schritt eines Summierens von zeitverschobenen Wellenformen von wenigstens zwei der reflektierten Signale umfasst, welche an jeder aus der Mehrzahl von separaten Messpositionen gemessen werden.

## Revendications

1. Procédé d'analyse d'un système de tuyaux (30), comprenant un tuyau (32), un isolant autour du tuyau (36), et un blindage (34) autour de l'isolant, concernant la présence d'une anomalie (40) sur le tuyau, comprenant les étapes consistant à :
appliquer une impulsion électrique à un emplacement de test (68) pour amener un signal d'onde électromagnétique appliqué à se déplacer le long du tuyau à travers l'anomalie ;
agencer au moins l'un capteur de champ électrique et d'un capteur de champ magnétique (70) au niveau d'une pluralité d'emplacements de mesure séparés (76a, 76b, 76c) entre l'emplacement de test (68) et un emplacement (40, 42, 43) de l'anomalie ; mesurer un signal réfléchi au niveau de chacun de la pluralité d'emplacements de mesure séparés, et déterminer si les réflexions viennent du côté gauche ou du côté droit de l'emplacement de test (68) ;
analyser les signaux réfléchis concernant des anomalies de signal associées à une impédance de tuyau du tuyau au niveau de l'emplacement de l'anomalie pour déterminer l'existence de l'anomalie sur le tuyau ; et
déterminer l'emplacement de l'anomalie en synchronisant l'arrivée d'onde des impulsions incidentes et réfléchies au niveau de chacun de la pluralité d'emplacements de mesure (76a, 76b, 76b), et déterminer la distance et l'emplacement de l'anomalie par un calcul de propagation d'onde.

2. Procédé selon la revendication 1, comprenant en outre les étapes consistant à :
détecter, au niveau d'un premier emplacement de mesure de réflexion (76a), une première représentation du au moins un signal réfléchi provoqué par le signal appliqué se déplaçant à travers l'anomalie ;
détecter, au niveau d'un second emplacement de mesure de réflexion (76b), une seconde représentation du au moins un signal réfléchi provoqué par le signal appliqué se déplaçant à travers l'anomalie ; et
analyser les première et seconde représentation du au moins un signal réfléchi concernant des anomalies de signal associées à l'anomalie sur le tuyau.

3. Procédé selon la revendication 1, comprenant en outre la fourniture d'une sonde, dans lequel la sonde comprend un boîtier (160), des éléments électroniques (162), une borne de tuyau (164), une borne de câble (166) et des saillies d'alignement (168).

4. Procédé selon la revendication 1, dans lequel l'étape consistant à agencer au moins un capteur de champ électrique et un capteur de champ magnétique au niveau de la pluralité d'emplacements de mesure comprend l'étape consistant à détecter un signal de tension de sortie proportionnelle à une vitesse de changement d'au moins un champ électrique et un champ magnétique.

5. Procédé selon la revendication 4, comprenant en outre l'étape consistant à intégrer le signal de tension de sortie par rapport au temps.

6. Procédé selon la revendication 4, comprenant en outre l'étape consistant à intégrer deux fois le signal de tension de sortie par rapport au temps.

7. Procédé selon la revendication 1, dans lequel l'étape consistant à déterminer l'emplacement de l'anomalie sur la base d'une direction des signaux réfléchis passant à travers les emplacements de mesure comprend l'étape consistant à comparer des représentations graphiques des signaux réfléchis mesurés au niveau de chacun de la pluralité d'emplacements de mesure séparés.

8. Procédé selon la revendication 1, dans lequel l'étape consistant à déterminer l'emplacement de l'anomalie sur la base d'une direction des signaux réfléchis passant à travers les emplacements de mesure comprend l'étape consistant à ajouter des formes d'onde décalées dans le temps d'au moins deux des signaux réfléchis mesurés au niveau de chacun de la pluralité d'emplacements de mesure séparés.
